# EUROPÄISCHE PATENTANMELDUNG

(11) **EP 4 748 530 A1**
(43) Veröffentlichungstag der Anmeldung: **27.05.2026**
(21) Anmeldenummer: 25192180.5
(22) Anmeldetag: 28.07.2025
(51) Int. Cl.: B24B 41/06, B23B 3/16, B23Q 1/76

(54) **JOCH-SPANNSYSTEM, SCHLEIFMASCHINE MIT EINEM JOCH-SPANNSYSTEM UND VERFAHREN ZUR VERWENDUNG EINES JOCH-SPANNSYSTEMS**

(30) Priorität: 25.11.2024 DE 102024134626
(71) Anmelder: Adelbert Haas GmbH, 78647 Trossingen (DE)
(72) Erfinder: Zepf, Timo, 78606 Seitingen-Oberflacht (DE)
(74) Vertreter: Westphal, Mussgnug & Partner Patentanwälte mbB

(57) **Zusammenfassung**

Bereitgestellt werden ein Joch-Spannsystem (10) zum Spannen eines Werkstücks zwischen zwei Spanneinsätzen (101,201) für eine Schleifmaschine (1), die eine angetriebene Rotationsachse (3) mit einem Spannzylinder (4) und einen Maschinentisch (2) auf-weist, wobei das Joch-Spansystem (10) aufweist:
- eine Pinolenbaugruppe (100) mit einer in den Spannzylinder (4) der angetriebenen Rotationsachse (3) der Schleifmaschine (1) aufnehmbaren und durch diesen Spannzylinder (4) betätigbaren Pinole, die den einen Spanneinsatz trägt, und
- einen am Maschinentisch (2) fixierbaren Reitstock (200), der den anderen Spanneinsatz trägt,
sowie eine Schleifmaschine (1) mit einem solchen Joch-Spannsystem (10) und ein Verfahren zur Verwendung eines solchen Joch-Spannsystems (10)

## Beschreibung

Die Erfindung betrifft ein Joch-Spannsystem zum Spannen eines Werkstückes für die Bearbeitung in einer Schleifmaschine gemäß dem Oberbegriff des Patentanspruchs 1, eine Schleifmaschine mit einem solchen Joch-Spannsystem und ein Verfahren zur Verwendung eines Joch-Spannsystems.

Bei bekannten Joch-Spannsystemen, werden die Werkstücke, zum Beispiel Schneidplatten für Drehmaschinen, für die Bearbeitung mit einer Schleifscheibe zwischen zwei Stößeln gespannt.

Um einen möglichst freien Zugang der Schleifscheibe zu dem Werkstück zu haben, der insbesondere deshalb wichtig ist, damit Bearbeitungsschritte mit einer schüsselförmigen Schleifscheibe durchgeführt werden können, ist es zum Beispiel aus der EP 1 579 955 B1 bekannt, die zwei Stößel axial fluchtend in zwei Schenkeln eines C-förmigen Joches aufzunehmen, welches allerdings mit der Rotationsachse mitschwenkt, so dass keine Komplettbearbeitung des Werkstückumfangs möglich ist. Der erste Stößel ist mittels einer Achse der Schleifmaschine gesteuert drehantreibbar, um das gespannte Werkstück im Umfangswinkel gegen die Schleifscheibe auszurichten. Der zweite Stößel ist drehbar in dem Joch gelagert und axial an dem Schenkel des Joches abgestützt. Das Werkstück wird zwischen den zwei Stößeln gespannt, indem das Joch mit dem zweiten Stößel kraftbeaufschlagt auf dem ersten Stößel axial bewegt wird.

Da das Werkstück nur kraftschlüssig zwischen den Stößeln gespannt ist, ist eine hohe axiale Spannkraft erforderlich. Diese hohe Spannkraft wird bei dieser bekannten Vorrichtung durch den zweiten Stößel an dem Schenkel des C-förmigen Joches abgestützt. Dadurch kann eine Verbiegung des Schenkels verursacht werden, durch welche ein Abweichen der zwei Stößel aus der exakten axialen Fluchtung bewirkt wird.

Aus der DE 1 924 315 A1 ist es bekannt, das Werkstück zwischen zwei Stößeln zu spannen. Der erste Stößel ist drehantreibbar und axial abgestützt in der Maschine gelagert. Der zweite Stößel ist axial fluchtend verschiebbar in der Maschine geführt. Zur Erzeugung der axialen Spannkraft wird der zweite Stößel mittels eines Spannbügels kraftbeaufschlagt. Der Spannbügel ist als zweiarmiger Hebel ausgebildet, dessen Lagerstelle mittels eines Zugankers am Maschinengestell gehalten wird. Der Spannbügel wird mittels eines hydraulischen Zylinderaggregates verschwenkt. Die große axiale Spannkraft führt nicht zu Fluchtungsfehlern der Stößel. Die axiale Spannkraft wird einerseits über den Zuganker in das Maschinengestell eingeleitet, andererseits muss die Lagerung des ersten Stößels in dem Maschinengestell die gesamte axiale Spannkraft aufnehmen. Die Stößelspannvorrichtung ist konstruktiv in die Schleifmaschine integriert, so dass die Schleifmaschine konstruktiv für die Stößelspannvorrichtung ausgelegt sein muss.

Eine dritte bekannte Variante eines Joch-Spannsystems offenbart die EP 2 859 994 A1, die eine Vorrichtung zum Spannen eines Werkstückes für die Bearbeitung in einer Schleifmaschine beschreibt, bei welcher große axiale Spannkräfte nur zu einer geringen Verformung des Joches führen und welche sich grundsätzlich für einen modulartigen Anbau an einer herkömmlichen Schleifmaschine eignet. Die nötigen Spannkräfte werden dabei über einen zusätzlichen Hydraulikzylinder erzeugt, was das Joch-Spannsystem teuer macht. Zudem ist es schwer ausrichtbar.

Betrachtet man die aus dem Stand der Technik bekannten Joch-Spannsysteme wird deutlich, dass es drei Anforderungen gibt, denen gleichzeitig gerecht zu werden bislang nicht gelungen ist: Erstens muss eine präzise Ausrichtung des Joch-Spannsystems unter Last, d.h. wenn der Anpressdruck wirkt, gewährleistet sein, damit gewährleistet ist, dass die Antriebsachse und die Gegenlagerachse exakt zueinander fluchten bzw. konzentrisch sind. Zweitens soll das Joch-Spannsystem einfach mit Standard-Schleifmaschinen verwendet werden können, wozu insbesondere wünschenswert ist, dass es unabhängig von einem speziellen Schleifmaschinentyp einfach zu installieren und vom Benutzer zu justieren ist. Drittens soll das Joch-Spannsystem hinreichend kompakt sein, um die Verwendung schlüsselförmiger Schleifscheiben zu ermöglichen. Die Aufgabe der Erfindung besteht daher darin, ein Joch-Spannsystem und ein Verfahren zur Verwendung eines Joch-Spannsystems bereitzustellen, das diesen Anforderungen gerecht wird sowie eine Schleifmaschine mit einem solchen Joch-Spannsystem bereitzustellen.

Diese Aufgabe wird erfindungsgemäß gelöst durch ein Joch-Spannsystem mit den Merkmalen des Patentanspruchs 1, eine Schleifmaschine mit den Merkmalen des Patentanspruchs 13 und ein Verfahren zur Verwendung eines Joch-Spannsystems mit den Merkmalen des Patentanspruchs 16. Vorteilhafte Weiterbildungen der Erfindung sind in den jeweiligen Unteransprüchen angegeben.

Das erfindungsgemäße Joch-Spannsystem dient zum Spannen eines Werkstücks zwischen zwei Spanneinsätzen. Es ist für eine Schleifmaschine, die eine angetriebene Rotationsachse mit einem Spannzylinder und einen Maschinentisch aufweist bestimmt und weist zumindest die folgenden Komponenten auf:
- eine Pinolenbaugruppe mit einer in den Spannzylinder der angetriebenen Rotationsachse der Schleifmaschine aufnehmbaren und durch diesen Spannzylinder betätigbaren Pinole, die den einen Spanneinsatz trägt, und
- einen am Maschinentisch fixierbaren Reitstock, der den anderen Spanneinsatz trägt. Der Reitstock kann auch als Gegenlager bezeichnet werden.

Auf diese Weise wird durch die Nutzung des Spannzylinders der angetriebenen Rotationsachse der Schleifmaschine, der typischerweise ohnehin eine Zug-/Druckstange aufweist, der zum Spannen benötigte Druck von der Maschinenseite her bereitgestellt und ein Vorsehen separater Spannmittel, insbesondere am Reitstock, gänzlich vermieden. Im Ergebnis wird dadurch das Joch-Spannsystem billiger und weitgehend unabhängig vom Maschinentyp einsetzbar. Zugleich kann der Reitstock kann dadurch kleiner ausgeführt werden, was die Verwendung schüsselförmiger Schleifscheiben, die in der Regel auch als Topfschleifscheiben bezeichnet werden, erleichtert.

In einer bevorzugten Ausführungsform der Erfindung ist der Reitstock im am Maschinentisch fixierten Zustand -vorzugsweise unter Last- ausrichtbar. Eine Ausrichtbarkeit unter Last ist dabei insbesondere gegeben, wenn bei einer Anpassung der Ausrichtung eine der Last entgegenwirkende Kraft nicht erst reduziert werden muss, sondern fortbesteht.

Der Gedanke, der durch diese Weiterbildung des Joch-Spannsystem realisiert ist, ist, dass es eigentlich gar nicht notwendig ist, Maßnahmen zu treffen, die einer Verformung des Reitstocks, der einen der Spanneinsätze trägt, unter Last entgegen wirken, wie beispielsweise eine Aufteilung der Spannkräfte oder eine massive Ausführung oder Verspannung des Reitstocks, wenn der Reitstock -vorzugsweise unter Last- ausrichtbar ausgeführt ist. Diese Eigenschaft erlaubt es nämlich, in einem Justierschritt die Fertigungsbedingungen einzustellen und durch die dann wirkenden Kräfte auftretenden Verformungen des Reitstocks durch eine Ausrichtung des Reitstocks zu kompensieren. Es wird also anders bei den aus dem Stand der Technik bekannten Systemen nicht mehr versucht, eine Verformung des Reitstocks unter Einwirkung der Spannkräfte zu vermeiden, sondern die Verformung wird hingenommen und durch eine entsprechende Ausrichtung des Reitstocks vorab kompensiert.

Sehr vorteilhaft ist es, wenn die Ausrichtung oder Justage unter Last erfolgen kann. Grundsätzlich könnte man zwar auch versuchen, die Auslenkung unter Last abzuschätzen und dann eine Kompensation im unbelasteten Zustand vornehmen; dies erweist sich aber als ein eher mühsames und zeitaufwendiges Verfahren, das zudem zu wenig genauen Ergebnissen führt.

Der Wegfall von Maßnahmen, die einer Verformung des Reitstocks entgegen wirken beeinflusst dessen Auslegung dahingehend, dass der Reitstock sehr kompakt ausgeführt werden kann, was den Einsatz von schüsselförmigen Schleifscheiben wesentlich vereinfacht, und das eine Anpassung an einen speziellen Schleifmaschinentyp weitgehend entfallen kann.

Gleichzeitig eröffnet dieser Wegfall die Möglichkeit, den Spanndruck einseitig aufzubringen und dazu bei einer Schleifmaschine ohnehin vorhandene Mittel zu nutzen, indem man eine in den Spannzylinder der angetriebenen Rotationsachse der Schleifmaschine aufnehmbare und durch diesen Spannzylinder betätigbare Pinole verwendet, um den einen Spannansatz zu tragen, womit auch für diesen Bestandteil des Spannsystems eine Anpassung an den jeweiligen Maschinentyp weitgehend entfällt.

Gemäß einer bevorzugten Ausführungsform der Erfindung ist der Reitstock im am Maschinentisch fixierten Zustand unter Last in mindestens einem, bevorzugt in allen der folgenden Freiheitsgrade
- durch Rotation um eine senkrecht zur Rotationsachse der Schleifmaschine und senkrecht zum Maschinentisch stehende B-Achse,
- durch Rotation um eine senkrecht zur Rotationsachse der Schleifmaschinen und senkrecht zur B-Achse stehende C-Achse,
- durch translatorische Anpassung des Abstands zwischen Maschinentisch und Reitstockspitze, und/oder
- durch Verschiebung parallel zu der Ebene des Maschinentisches in eine Richtung, die zumindest eine Komponente in Richtung senkrecht zur Rotationsachse der Schleifmaschine aufweist,
ausrichtbar ist.

Mechanismen, mit denen eine solche Ausrichtbarkeit unter Last besonders einfach realisiert werden kann, sind insbesondere solche, bei denen die Verstellung durch einen durch eine Einstellschraube betätigbaren Keil bewirkt wird und bei denen die Bewegung optinal zusätzlich mit einer Rückzugfeder oder einer Druckfeder unterstützt wird. Dementsprechend ist es vorteilhaft, wenn der Reitstock zum Ausrichten unter Last mindestens einen durch eine Einstellschraube betätigbaren Keil und vorzugsweise entweder eine Rückzugfeder oder eine Druckfeder aufweist.

Wenn der Reitstock eine als Flansch ausgeführte Reitstockspitze aufweist, so dass die Ausrichtung des Reitstocks unter Last zumindest teilweise, insbesondere im Hinblick auf eine translatorische Anpassung des Abstands zwischen Maschinentisch und Reitstockspitze, und/oder eine Verschiebung parallel zu der Ebene des Maschinentisches in eine Richtung, die zumindest eine Komponente in Richtung senkrecht zur Rotationsachse der Schleifmaschine aufweist, durch einen Ausrichtdorn erfolgen kann.

Besonders vorteilhaft ist es, wenn das Joch-Spannsystem zusätzlich mindestens einen Prüfkörper zum Ausrichten des Reitstocks unter Last umfasst. Grundsätzlich kann dies aber auch mit einem Werkstück erfolgen. Besonders genau kann die Ausrichtung des Reitstocks mit werkstückspezifischen Prüfkörpern erfolgen, so dass optimalerweise das Joch-Spannsystem für jede zu bearbeitende Werkstückkategorie einen zugehörigen, angepassten Prüfkörper aufweist.

Der Durchsatz einer mit einem Joch-Spannsystem ausgerüstente Maschine kann signifikant erhöht werden, wenn dass das Joch-Spannsystem zusätzlich eine Beladeeinheit mit einer Halterung zum Halten eines zu bearbeitenden Werkstücks solange dieses nicht eingespannt ist, aufweist.

Insbesondere kann diese Halterung an einem Arm angeordnet sein, der -vorzugsweise in einer linearen Bewegung, aber auch andere Bewegungen wie z.B. eine Schwenkbewegung sind ebenfalls möglich- von einer Halteposition, in der das zu bearbeitende Werkstück durch Verringerung des Abstands zwischen den Spanneinsätzen eingespannt werden kann, in eine weiter von den Spanneinsätze entfernte, zurückgezogene Nachladeposition, in der das nächste Werkstück manuell oder automatisiert in die Halterung eingelegt werden kann und wieder zurück in die Halteposition bewegt werden kann. Diese Bewegung kann vorzugsweise angetrieben sein und insbesondere pneumatisch angetrieben sein.

Zur Anpassung an die Bearbeitung unterschiedlicher Arten von Werkstücken kann es zudem hilfreich sein, wenn die Länge des Arms anpassbar ist.

Ferner können besonders gute Ergebnisse erzielt werden, wenn die Halterung austauschbar ist, so dass die Verwendung unterschiedlicher, an das jeweilige zu bearbeitende Werkstück angepasster Halterungen möglich ist.

Besonders hohe Präzision bei der Bearbeitung kann erreicht werden, wenn die Spanneinsätze, der Prüfkörper und/oder die Halterung werkstückspezifisch sind. Die Spanneinsätze können dazu vorteilhafterweise selbstklemmend in in die Pinolenspitze und/oder in die Reitstockspitze eingearbeitete Innenkegel aufgenommen sein.

Um die Wiederholgenauigkeit bei der Installation zu steigern, ist es bevorzugt, dass der Reitstock mit einem Nullpunktspannsystem für die Installation auf dem Maschinentisch ausgestattet ist.

Bevorzugt ist die Pinole gegen Rotation spielfrei in einem Pinolengehäuse, das ebenfalls Bestandteil der Pinolenbaugruppe ist, aufgenommen, wobei bevorzugt zwei Lagerstellen vorgesehen sind. Vorteilhaft ist insbesondere, wenn die Pinole in zwei Ebenen spielfrei einstellbar ist, was beispielsweise durch Hydrodehnspannfutter erfolgen kann. Durch die Minimierung des Spiels wird das Risiko, dass das Werkstück bei der Bearbeitung durch den Schleifscheibendruck seitlich weggedrückt wird, signifikant reduziert. Insbesondere ist es für ein hochwertiges Schleifen von Profilformen zweckmäßig, wenn die Pinole rotativ bis umkehrspielfrei gelagert ist. Über das Pinolengehäuse kann die Pinolenbaugruppe an der Schleifmaschinen, genauer gesagt an deren angetriebener Rotationsachse, befestigt werden.

Die erfindungsgemäße Schleifmaschine weist eine angetriebene Rotationsachse mit einem Spannzylinder und einen Maschinentisch auf und ist mit einem erfindungsgemäßen Joch-Spansystem ausgerüstet. Dabei ist die Pinole in den Spannzylinder der angetriebenen Rotationsachse der Schleifmaschine aufgenommen und durch diesen Spannzylinder, vorzugsweise eine diesem zugeordnete Zug-/Druckstange betätigbar, und dabei ist der Reitstock am Maschinentisch fixiert.

Das erfindungsgemäße Verfahren zur Verwendung eines erfindungsgemäßen Joch-Spannsystems weist zumindest die Schritte
- Fixieren des Reitstocks auf dem Maschinentisch einer Schleifmaschine,
- Anordnen der Pinolenbaugruppe an der angetriebenen Rotationsachse der Schleifmaschine, wobei die Pinole in den Spannzylinder der angetriebenen Rotationsachse der Schleifmaschine eingeführt wird, und
- Bearbeiten mindestens eines zwischen den Spanneinsätzen der Pinole und des Reitstocks eingespannten Werkstücks auf.

Dabei wird bei dem Verfahren die zum Einspannen des Werkstücks die benötigte Spannkraft durch eine Zug-/Druckstange des Spannzylinders erzeugt und über die Pinole eingeleitet.

Durch dieses Verfahren wird es möglich, ein Joch-Spannsystem an fast jeder marktüblichen Schleifmaschine reversibel nachzurüsten und bei Bedarf zu betreiben. Da die Mittel zum Bereitstellen der Spannkraft Bestandteil der Schleifmaschine sind, kann zudem das Joch-Spannsystem kostengünstig und sehr kompakt ausgeführt sein, so dass beim Schleifen schüsselförmige Schleifscheiben verwendet werden können. Es bleibt auch möglich, den Umfang des Werkstücks mit einer Umfangschleifscheibe zu schleifen und/oder ein Profil am Umfang zu schleifen.

In einer bevorzugten Ausführungsform des Verfahrens wird vor dem Bearbeiten eines zwischen den Spanneinsätzen der Pinole und des Reitstocks eingespannten Werkstücks der Reitstock einmalig so ausgerichtet wird, dass eine durch die jeweils benötigte Spannkraft hervorgerufene Verformung des Reitstocks kompensiert wird. Auf diese Weise kann eine hochpräzise Ausrichtung gewährleistet werden, ohne dass aus dem Einbringen der Spannkraft resultierende Deformationen durch eine aufwändige Gestaltung des Reitstocks entgegengewirkt werden muss. Bevorzugt erfolgt das einmalige Ausrichten des Reitstocks unter Last.

Bevorzugt erfolgt das Ausrichten des am Maschinentisch fixierten Reitstocks in den folgenden Freiheitsgraden:
- durch Rotation um eine senkrecht zur Rotationsachse der Schleifmaschine und senkrecht zum Maschinentisch stehende B-Achse,
- durch Rotation um eine senkrecht zur Rotationsachse der Schleifmaschinen und senkrecht zur B-Achse stehende C-Achse,
- durch translatorische Anpassung des Abstands zwischen Maschinentisch und Reitstockspitze, und/oder
- durch Verschiebung parallel zu der Ebene des Maschinentisches in eine Richtung, die zumindest eine Komponente in Richtung senkrecht zur Rotationsachse der Schleifmaschine aufweist.

Zum Einspannen eines Werkstücks zwischen den Spanneinsätzen der Pinole und des Reitstocks wird vorzugsweise das Werkstück mit einer Beladeeinheit in die Position, in der es eingespannt werden soll, überführt und dort gehalten.

Die Erfindung wird nachfolgend anhand von Figuren, die Ausführungsbeispiele darstellen, näher erläutert. Es zeigt:
- Fig. 1:: Eine isometrische Ansicht eines Ausführungsbeispiels eines Joch-Spannsystems;
- Fig. 2a:: eine isometrische Darstellung der Pinolenbaugruppe des Joch-Spannsystems aus Figur 1;
- Fig. 2b:: einen Querschnitt entlang einer ersten Ebene, in der die Längsachse der Pinole liegt durch die Pinolenbaugruppe aus Figur 2a;
- Fig. 2c:: einen Querschnitt entlang einer zweiten Ebene, in der die Längsachse der Pinole liegt und die senkrecht auf der ersten Ebene steht durch die Pinolenbaugruppe aus Figur 2a
- Fig. 3a:: eine isometrische Darstellung des Reitstocks des Joch-Spannsystems aus Figur 1;
- Fig. 3b:: einen ersten Querschnitt durch den Reitstock
- Fig. 3c.: einen zweiten Querschnitt durch den Reitstock
- Fig. 4:: eine isometrische Darstellung der Ladehilfe des Joch-Spannsystems aus Figur 1;
- Fig. 5:: einen Aufsatz für die Ladehilfe aus Figur 4 in Halteposition;
- Fig. 6a:: Eine isometrische Ansicht einer Schleifmaschine mit daran installiertem Joch-Spannsystem aus Figur 1; und
- Fig. 6b:: einen Schnitt durch die Schleifmaschine aus Figur 6a.

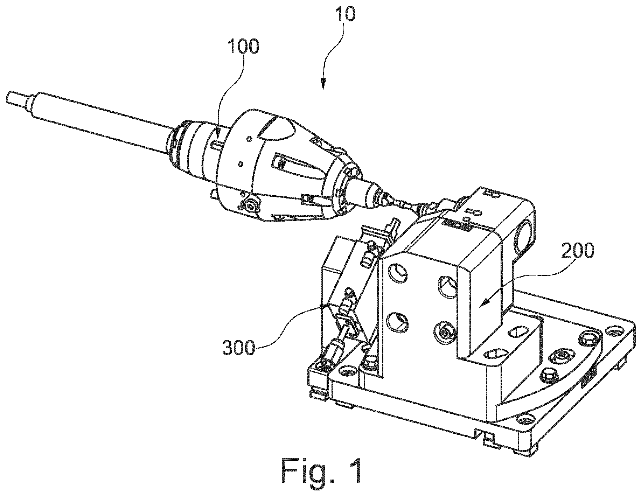

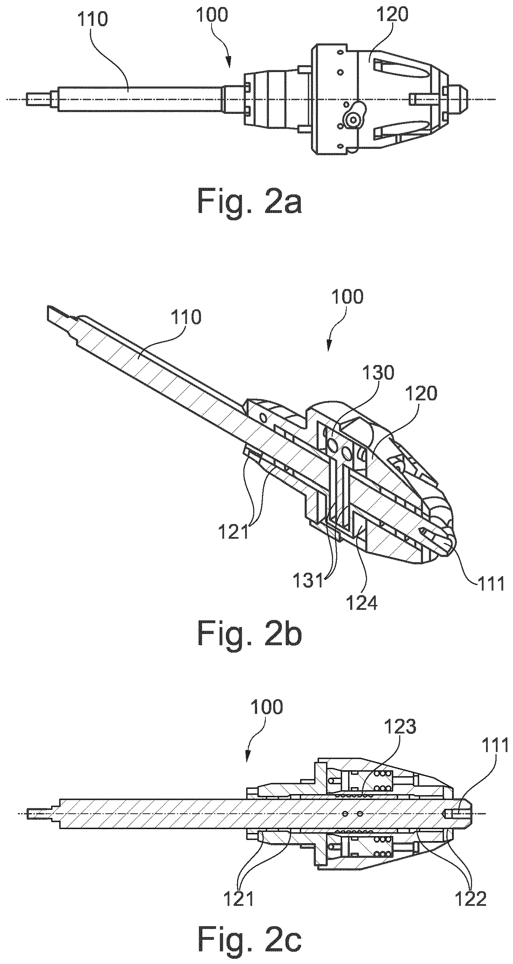

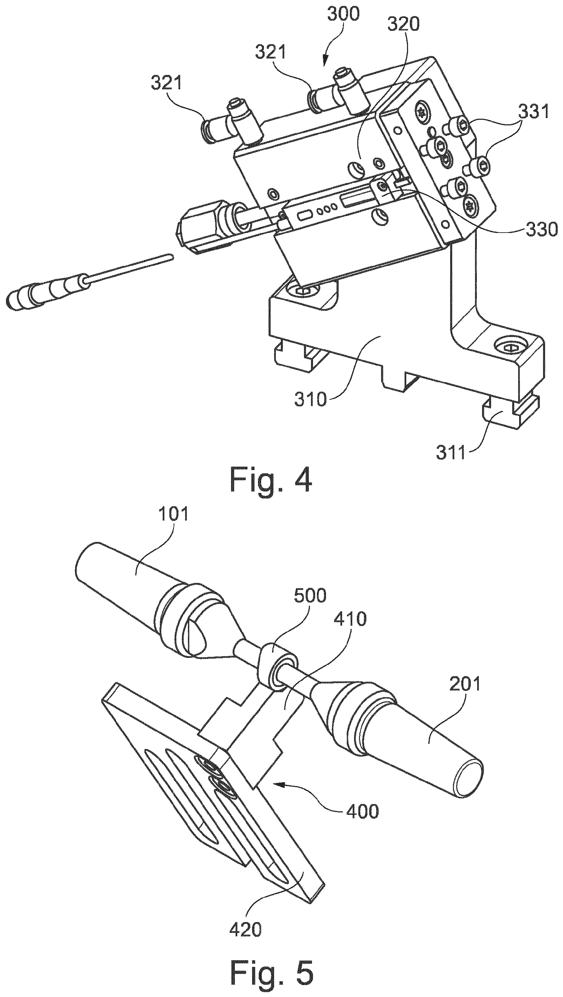

Figur 1 zeigt eine isometrische Ansicht eines Ausführungsbeispiels eines Joch-Spannsystems 10 mit Pinolenbaugruppe 100, Reitstock 200 und Ladehilfe 300, wobei diese Komponenten in der Position angeordnet sind, die sie bei der Bearbeitung eines Werkstücks 1 einnehmen. In dieser Bearbeitungsposition ist das Werkstück 1 zwischen zwei Spanneinsätzen 101 und 201 gespannt und die in Figur 5 gezeigte Werkstückaufnahme 350 der Ladehilfe 300 befindet sich in einer zurückgezogenen Nachladeposition. Der Spanneinsatz 101 ist selbstklemmend in einen in Figur 2b besonders gut zu erkennenden, in die Pinolenspitze der Pinole 110 eingearbeiteten Innenkegel 111 aufgenommen; der Spanneinsatz 201 ein einen in die drehbar gelagerte Reitstockspitze 210 eingearbeiteten Innenkegel 211; die dazu benötigte Spannkraft wird, wie unten noch genauer beschrieben wird, über die Pinole 110 in das Werkstück 1 eingeleitet. Das Joch-Spannsystem 10 weist also keine eigenen Spannmittel auf, sondern leitet maschinenseitig in die Pinole 110 eingebrachte Spannkräfte weiter.

Die Figuren 2a bis 2c geben genaueren Aufschluss über den Aufbau der Pinolenbaugruppe. Die Pinole 110 durchsetzt ein Pinolengehäuse 120 zentral und ist axial verschiebbar im Pinolengehäuse 120 gelagert. Wie man besonders gut in Figur 2c erkennt, ist die Pinole 110 in zwei Ebenen durch Lageranordnungen 121,122 im Pinolengehäuse 120 gelagert und wird durch vorgespannte Hydrodehnmembrane 123 spielfrei geführt.

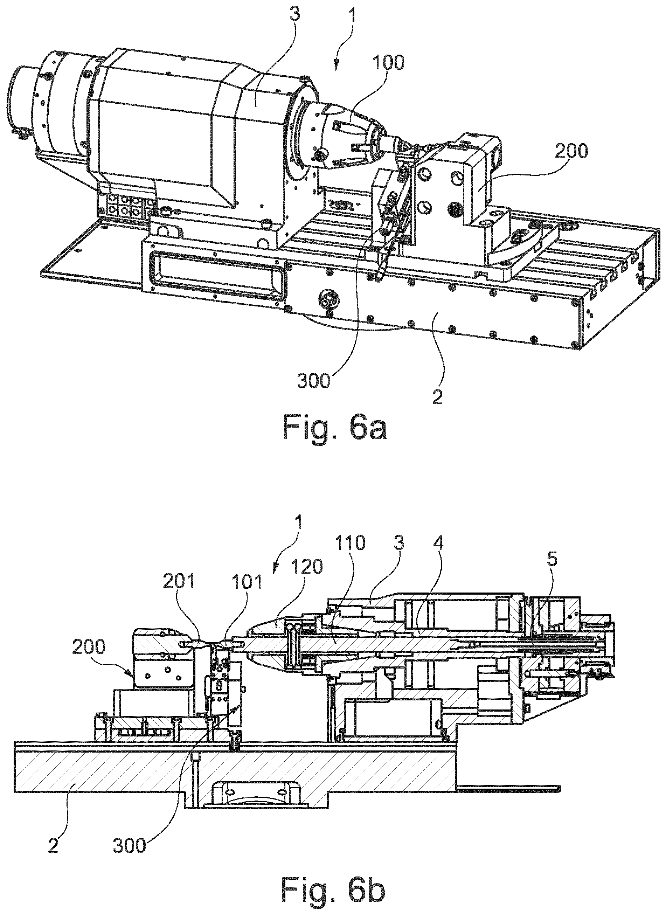

Die axiale Verschiebbarkeit der Pinole 110 wird dadurch beschränkt, dass sie über ein Paar von Schrauben 131 mit einem im Wesentlichen quaderförmigen Führungskörper 130 verbunden ist, der in einer im Inneren des Pinolengehäuses 120 vorhandenen Führung 124 über eine begrenzte Strecke hinweg axial verschiebbar ist. Wird das Pinolengehäuse 120 mit einer angetriebenen Rotationsachse 3 einer Schleifmaschine 1 verbunden, wie dies in Figur 6a und 6b gezeigt ist, wird eine Drehung des Pinolengehäuses 120 über den Führungskörper 130 auf die Pinole 110 übertragen, die sich somit gemeinsam mit dem Pinolengehäuse 120 drehen kann. Die axiale Bewegung der Pinole 110 wird, wie man besonders gut in der Querschnittsdarstellung der Schleifmaschine 1 mit daran installiertem Joch-Spannsystem 10 erkennen kann, durch die Zug-/Druckstange 5 des Spannzylinders 4 der angetriebenen Rotationsachse 3 der Schleifmaschine 1 gesteuert, die insbesondere auch den Anpressdruck, durch den das Werkstück zwischen den Spanneinsätzen 101,201 gehalten wird, bereitstellt.

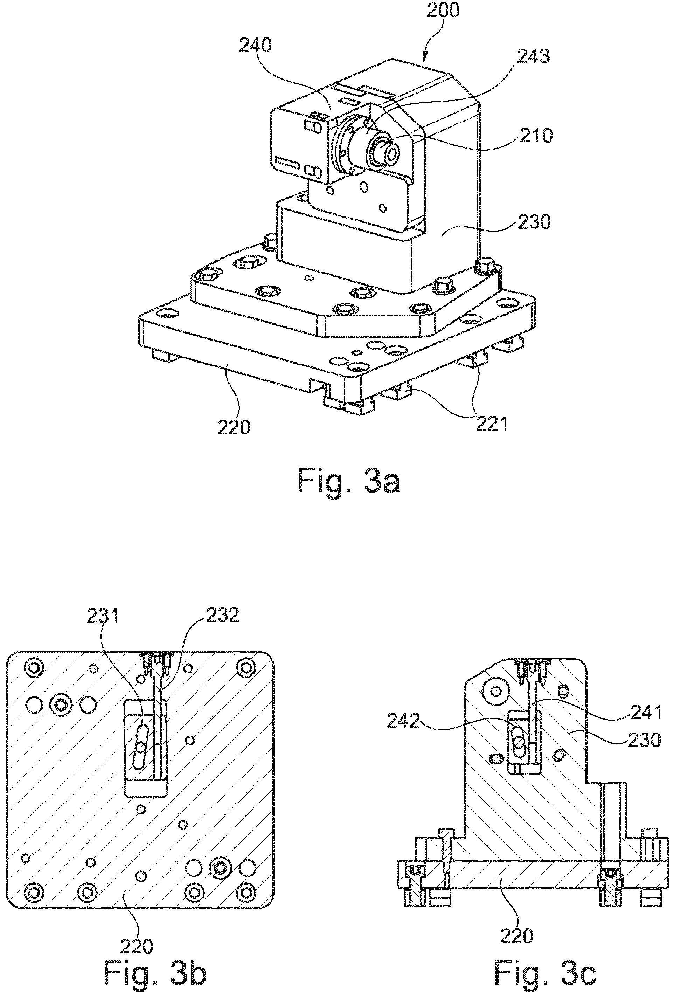

Der Aufbau und wesentliche Eigenschaften des Reitstocks 200 lassen sich aus den Figuren 3a bis 3c entnehmen. Der Reitstock 200 weist eine Bodenplatte 220 mit Führungselementen 221 auf, mit denen er, wie in Figur 6a erkennbar, in im Maschinentisch 2 vorhandenen Führungen befestigt wird, so dass die Bodenplatte 220 fixiert ist und parallel zum Maschinentisch 2 angeordnet ist.

Auf der Bodenplatte 220 ist ein Reitstockkörper 230 um eine zur Bodenplatte 220 und damit im installierten Zustand des Reitstocks 200 auch zum Maschinentisch 2 und zur angetriebenen Rotationsachse 3 der Schleifmaschine 1 senkrecht stehende B-Achse, drehbar angeordnet. Diese Bewegung ist durch die Form der Löcher, in denen die Verbindungselemente, mit denen der Reitstockkörper 230 mit der Bodenplatte 220 verbunden ist, geführt sind, vorgegebenen Winkelbereich beschränkt und wird durch den in Figur 3b skizzierten Keilmechanismus 231 über eine Einstellschraube 232 gesteuert. Der mit der Einstellschrauben 232 zusammenwirkende Keilmechanismus 231 stellt dabei wenn er nicht aktiv betätigt wird sicher, dass der Reitstockkörper 230 auch bei eingeleiteter Spannkraft in Position bleibt und bietet die Möglichkeit, durch Betätigung der Einstellschraube 232 auch unter Last den Reitstockkörper 230 gegen die wirkende Spannkraft um die B-Achse herum zu drehen, um den Reitstock 200 zu justieren.

An einer Seitenfläche des Reitstockkörpers 230 ist ein Reitstockarm 240 um eine senkrecht zur angetriebenen Rotationsachse 3 der Schleifmaschine 1 und senkrecht zur B-Achse stehende C-Achse drehbar angeordnet, der an seiner der angetriebenen Rotationsachse 3 der Schleifmaschinen 1 einen Flansch 243 mit einer drehbar darin angeordneten Reitstockspitze 210, in die der zweite Spanneinsatz 201 aufgenommen ist, trägt. Diese Bewegung ist durch die Form der Löcher, in denen die Verbindungselemente, mit denen der Reitstockkörper 230 mit dem Reitstockarm 240 verbunden ist, geführt sind, vorgegebenen Winkelbereich beschränkt.

Die Drehung um die C-Achse wird ebenfalls durch einen in Figur 3c skizzierten Keilmechanismus 241 über eine weitere Einstellschraube 242 gesteuert. Der mit der Einstellschraube 242 zusammenwirkende Keilmechanismus 241 stellt dabei wenn er nicht aktiv betätigt wird sicher, dass der Reitstockarm 240 auch bei eingeleiteter Spannkraft in Position bleibt und bietet die Möglichkeit, durch Betätigung der Einstellschraube 242 auch unter Last den Reitstockarm 240 gegen die wirkende Spannkraft um die C-Achse herum zu drehen, um den Reitstock 200 zu justieren.

Der Flansch 243 ist dabei so gestaltet, dass durch seine Positionierung der Abstand zwischen Maschinentisch 2 und Reitstockspitze geändert werden kann und dass er parallel zu der Ebene des Maschinentisches 2 in eine Richtung, die zumindest eine Komponente in Richtung senkrecht zur angetriebenen Rotationsachse 3 der Schleifmaschine 1 aufweist, verschoben werden kann.

Figur 4 zeigt eine isometrische Darstellung der Ladehilfe 300 des Joch-Spannsystems 10 aus Figur 1. Die Ladehilfe 300 weist einen Halter 310 mit Führungselementen 311 auf, mit denen er, wie in Figur 6a erkennbar, in im Maschinentisch 2 vorhandenen Führungen befestigt wird, so dass der Halter fixiert ist. An dem Halter 310 ist ein im installierten Zustand schräg nach oben weisender Pneumatikzylinder 320 mit Druckluftanschlüssen 321 angeordnet, der einen in ihm aufgenommenen Kolben mit Frontplatte 330 vor- und zurück bewegen kann. An der Frontplatte 330 sind Schrauben 331 zur Befestigung eines Aufsatzes 400, der in Figur 5 in einer Halteposition gezeigt ist, auf.

Der Aufsatz 400 weist einen Werkstückhalter 410 auf, der an einer mit Langlöchern 421 versehenen Halteplatte 420 befestigt ist, über die die Verbindung zur Ladehilfe 300, genauer zu deren Frontplatte 330 herstellbar ist. Mit dem Werkstückhalter 410, dessen exakte Formgebung vorzugsweise werkstückabhängig ist, kann ein Werkstück oder ein Prüfkörper 500 durch Ausfahren des Kolbens mit Frontplatte 330 zwischen den Spanneinsätzen 101,201 positioniert und dort durch axiale Verschiebung der Pinole 110 durch die Zug-/Druckstange 5 der Schleifmaschine 1 eingespannt werden.

Bei der Installation des Joch-Spannsystems 10 an der Schleifmaschine 1 wird der Reitstock 200 auf dem Maschinentisch so vorpositioniert, dass die Reitstockspitze 210 in Verlängerung der angetriebenen Rotationsachse 3 liegt. Anschließend wird ein Werkstück oder Prüfkörper 500 zwischen den Spanneinsätzen 101,201 angeordnet und die Spannkraft bis auf die bei der Bearbeitung benötigte Spannkraft erhöht, wobei die durch die Spannkraft hervorgerufene Verformung des Reitstocks 200 durch Verstellung des Reitstocks unter Last ausgeglichen wird.

### Bezugszeichenliste

- 1: Schleifmaschine
- 2: Maschinentisch
- 3: angetriebene Rotationsachse
- 4: Spannzylinder
- 10: Joch-Spannsystem
- 100: Pinolen-Baugruppe
- 101: Spanneinsatz
- 110: Pinole
- 111: Innenkegel
- 120: Pinolengehäuse
- 121,122: Lageranordnung
- 123: Hydrodehnmembran
- 124: Führung
- 200: Reitstock
- 201: Spanneinsatz
- 210: Reitstockspitze
- 211: Innenkegel
- 220: Bodenplatte
- 221: Führungselement
- 230: Reitstockkörper
- 240: Reitstockarm
- 300: Beladeeinheit
- 310: Halter
- 311: Führungselement
- 320: Pneumatikzylinder
- 321: Druckluftanschluss
- 330: Kolben mit Frontplatte
- 331: Schraube
- 400: Halterung
- 410: Werkstückhalter
- 420: Halteplatte
- 500: Prüfkörper

## Patentansprüche

1. Joch-Spannsystem (10) zum Spannen eines Werkstücks zwischen zwei Spanneinsätzen (101,201) für eine Schleifmaschine (1), die eine angetriebene Rotationsachse (3) mit einem Spannzylinder (4) und einen Maschinentisch (2) aufweist, wobei das Joch-Spansystem (10) aufweist:
- eine Pinolenbaugruppe (100) mit einer in den Spannzylinder (4) der angetriebenen Rotationsachse (3) der Schleifmaschine (1) aufnehmbaren und durch diesen Spannzylinder (4) betätigbaren Pinole, die den einen Spanneinsatz (101) trägt, und
- einen am Maschinentisch (2) fixierbaren Reitstock (200), der den anderen Spanneinsatz (201) trägt.

2. Joch-Spannsystem (10) nach Anspruch 1
**dadurch gekennzeichnet, dass** der Reitstock (200) im am Maschinentisch (2) fixierten Zustand -vorzugsweise unter Last- ausrichtbar ist.

3. Joch-Spannsystem (10) nach Anspruch 2
**dadurch gekennzeichnet, dass** der Reitstock (200) im am Maschinentisch (2) fixierten Zustand unter Last
- durch Rotation um eine senkrecht zur angetriebenen Rotationsachse (3) der Schleifmaschine (1) und senkrecht zum Maschinentisch (2) stehende B-Achse,
- durch Rotation um eine senkrecht zur angetriebenen Rotationsachse (3) der Schleifmaschine (1) und senkrecht zur B-Achse stehende C-Achse,
- durch translatorische Anpassung des Abstands zwischen Maschinentisch (2) und Reitstockspitze, und/oder
- durch Verschiebung parallel zu der Ebene des Maschinentisches (2) in eine Richtung, die zumindest eine Komponente in Richtung senkrecht zur angetriebenen Rotationsachse (3) der Schleifmaschine (1) aufweist
ausrichtbar ist.

4. Joch-Spannsystem (10) nach einem der Ansprüche 1 bis 3, **dadurch gekennzeichnet, dass** der Reitstock (200) zum Ausrichten unter Last mindestens einen durch eine Einstellschraube betätigbaren Keilmechanismus und vorzugsweise entweder eine Rückzugfeder oder eine Druckfeder aufweist.

5. Joch-Spannsystem (10) nach einem der Ansprüche 1 bis 4, **dadurch gekennzeichnet, dass** der Reitstock (200) eine als Flansch ausgeführte Reitstockspitze (210) aufweist, so dass die Ausrichtung des Reitstocks (200) unter Last zumindest teilweise durch einen Ausrichtdorn erfolgen kann.

6. Joch-Spannsystem (10) nach einem der Ansprüche 1 bis 5, **dadurch gekennzeichnet, dass** das Joch-Spannsystem (10) zusätzlich mindestens einen Prüfkörper (500) zum Ausrichten des Reitstocks (200) unter Last umfasst.

7. Joch-Spannsystem (10) nach einem der Ansprüche 1 bis 6, **dadurch gekennzeichnet, dass** das Joch-Spannsystem (10) zusätzlich eine Beladeeinheit (300) mit einer Halterung (400) zum Halten eines zu bearbeitenden Werkstücks solange dieses nicht eingespannt ist, aufweist.

8. Joch-Spannsystem (10) nach Anspruch 7,
**dadurch gekennzeichnet, dass** die Halterung (400) austauschbar an der Beladeeinheit (300) angeordnet ist.

9. Joch-Spannsystem (10) nach Anspruch 7 oder 8,
**dadurch gekennzeichnet, dass** die Halterung (400) in eine Nachladeposition zurückziehbar ist.

10. Joch-Spannsystem (10) nach einem der Ansprüche 7 bis 9, **dadurch gekennzeichnet, dass** die Beladeeinheit (300) pneumatisch angetrieben ist.

11. Joch-Spannsystem (10) nach einem der vorstehenden Ansprüche,
**dadurch gekennzeichnet, dass** die Spanneinsätze (101,201), der Prüfkörper (500) und/oder die Halterung (400) werkstückspezifisch sind.

12. Joch-Spannsystem (10) nach einem der vorstehenden Ansprüche,
**dadurch gekennzeichnet, dass** der Reitstock (200) mit einem Nullpunktspannsystem für die Installation auf dem Maschinentisch (2) ausgestattet ist.

13. Joch-Spannsystem (10) nach einem der vorstehenden Ansprüche,
**dadurch gekennzeichnet, dass** die Pinole (110) gegen Rotation spielfrei in einem Pinolengehäuse (120) aufgenommen ist und/oder rotativ bis umkehrspielfrei gelagert ist.

14. Joch-Spannsystem (10) nach Anspruch 13,
**dadurch gekennzeichnet, dass** die Pinole (110) in zwei Ebenen spielfrei einstellbar ist.

15. Schleifmaschine (1), die eine angetriebene Rotationsachse (3) mit einem Spannzylinder (4) und einen Maschinentisch (2) aufweist und mit einem Joch-Spannsystem (10) nach einem der Ansprüche 1 bis 14 ausgerüstet ist, wobei die Pinole (110) in den Spannzylinder (4) der angetriebenen Rotationsachse (3) der Schleifmaschine (1) aufgenommen und durch diesen Spannzylinder (4) betätigbar ist, und wobei der Reitstock (200) am Maschinentisch (2) fixiert ist.

16. Verfahren zur Verwendung eines Joch-Spannsystems (10) nach einem der Ansprüche 1 bis 12 mit den Schritten
- Fixieren des Reitstocks (200) auf dem Maschinentisch (2) einer Schleifmaschine (1),
- Anordnen der Pinolenbaugruppe (100) an der angetriebenen Rotationsachse (3) der Schleifmaschine (1), wobei die Pinole (110) in den Spannzylinder (4) der angetriebenen Rotationsachse (3) der Schleifmaschine (1) eingeführt wird, und
- Bearbeiten mindestens eines zwischen den Spanneinsätzen (101,201) der Pinole (110) und des Reitstocks (200) eingespannten Werkstücks,
wobei bei dem Verfahren zum Einspannen des Werkstücks die benötigte Spannkraft durch eine Zug-/Druckstange (5) des Spannzylinders (4) erzeugt und über die Pinole (110) eingeleitet wird.

17. Verfahren nach Anspruch 16,
**dadurch gekennzeichnet, dass** vor dem Bearbeiten eines zwischen den Spanneinsätzen (101,201) der Pinole (110) und des Reitstocks (200) eingespannten Werkstücks der Reitstock (200) einmalig so ausgerichtet wird, dass eine durch die jeweils benötigte Spannkraft hervorgerufene Verformung des Reitstocks (200) kompensiert wird.

18. Verfahren nach Anspruch 17,
**dadurch gekennzeichnet, dass** das einmalige Ausrichten des Reitstocks (200) unter Last erfolgt.

19. Verfahren nach einem der Ansprüche 16 bis 18,
**dadurch gekennzeichnet, dass** zum Einspannen eines Werkstücks zwischen den Spanneinsätzen (101,201) der Pinole (110) und des Reitstocks (200) das Werkstück mit einer Beladeeinheit (300) in die Position, in der es eingespannt werden soll, überführt und dort gehalten wird.
